# EUROPÄISCHE PATENTANMELDUNG

(11) **EP 2 955 699 A1**
(43) Veröffentlichungstag der Anmeldung: **16.12.2015**
(21) Anmeldenummer: 14172066.4
(22) Anmeldetag: 12.06.2014
(51) Int. Cl.: G07C 5/00, B60W 50/00, H04L 29/08

(54) **Verfahren und System zum Ausgeben von Fehlerinformationen bei der On-Board-Diagnose von Fahrzeugen**

(71) Anmelder: AKKA GmbH, 80992 München (DE)
(72) Erfinder: Ungewitter, Lars, 80796 München (DE); Scholl, Andreas, 90537 Feucht (DE)
(74) Vertreter: Thun, Clemens

(57) **Zusammenfassung**

Bei einem Verfahren zum Ausgeben von Fehlerinformationen eines Fahrzeugdiagnosesystems (100) an ein mit einem Fahrzeug koppelbares Diagnosegerät (50) kann das Diagnosegerät (50) mit dem Fahrzeug über einen Kommunikationsanschluss (2, 302) lösbar verbunden werden. Der Kommunikationsanschluss ist fahrzeugintem über ein Bussystem mit mindestens einem Steuergerät verbunden, welches nach Aufforderung durch das Diagnosegerät gespeicherte Fehlerinformationen an das Diagnosegerät übermittelt, wobei dem Steuergerät mindestens ein Slave (110, 111, 112, 113) nachgeordnet ist, dessen Fehlermeldungen von dem Steuergerät gespeichert und an das Diagnosegerät übermittelt werden, und wobei der Slave (110, 111, 112, 113) Fehlermeldungen an das zugeordnete Steuergerät in Form eines Fehlercodes gemeinsam mit einer den Sensor kennzeichnenden Identifikation übermittelt.

## Beschreibung

Die vorliegende Erfindung betrifft ein Verfahren zum Ausgeben von Fehlerinformationen eines Fahrzeugdiagnosesystems sowie ein entsprechendes Fahrzeugdiagnosesystem mit verbesserten Möglichkeiten zur Datenausgabe an ein mit einem Fahrzeug koppelbares Diagnosegerät.

On-Board-Diagnosesysteme dienen dazu, während des Fahrbetriebs eines Fahrzeugs alle abgasbeeinflussenden Systeme sowie weitere wichtige Steuergeräte, deren Daten zugänglich sind, zu überwachen. Auftretende Fehler sollen dabei dem Fahrer über eine Kontrollanzeige angezeigt und in dem jeweiligen Steuergerät nicht flüchtig gespeichert werden. Ferner werden entsprechende Fehlermeldungen beispielsweise während einer Wartung für genormte Schnittstellen abgefragt, was dadurch erfolgt, dass das Fahrzeug mit einem entsprechenden Diagnosegerät gekoppelt wird.

Derartige OBD-Systeme wurden zunächst in den USA eingeführt, sind allerdings auch in anderen Ländern gesetzlich vorgeschrieben. Grundlage für die Einführung der entsprechenden Gesetzesnormen war, dass es nicht ausreicht, sein Fahrzeug im Ausgangszustand, also bei der Zulassung die entsprechenden Abgasvorschriften einhält, sondern dass deren Einhaltung tatsächlich über die gesamte Lebensdauer des Fahrzeugs hinweg sichergestellt wird. Die Fahrzeuge müssen hierzu über eigene elektronische Systeme zur Selbstüberwachung verfügen, die bestimmte, insbesondere abgasrelevante Komponenten des Fahrzeugs überwachen. Beispiele für die von den On-Board-Diagnosesystem überwachten Funktionen sind die Lambdasondenfunktion, Verbrennungsaussetzer, der Wirkungsgrad des Katalysators sowie gegebenenfalls die Funktion der Abgasrückführung, des Sekundärluftsystems sowie das Tankentlüftungssystem. Abgasrelevante Fehler werden nicht nur über eine in den Armaturen integrierte Signal-lampe - die so genannte Motorkontrollleuchte (MIL bzw. Malfunction Indicator Light) angezeigt sondern derart gespeichert, dass sie im Rahmen einer externen Diagnose abgerufen werden können.

Das externe Abrufen der gespeicherten Fehlerinformationen erfolgt dadurch, dass ein externes Diagnosegerät über einen genormten Stecker mit dem Fahrzeug gekoppelt wird und die fahrzeugintern über einen Bus mit dem Stecker verbundenen Steuergeräte kontaktiert. Diese Geräte müssen dann entsprechend gesetzlich vorgeschriebenen Normen innerhalb einer bestimmten Reaktionszeit, die 50 ms bei ISOCAN beträgt, reagieren und gegebenenfalls abgespeicherte Fehlerinformationen an das Diagnosegerät übermitteln.

Die gesetzlich vorgeschriebene Kommunikation zwischen dem Fahrzeugdiagnosesystem und dem externen Diagnosegerät schreibt allerdings nicht nur vor, dass die Steuergeräte des Diagnosesystems innerhalb einer bestimmten Zeit antworten müssen, sondern führt auch eine Beschränkung hinsichtlich der Anzahl der an der Kommunikation teilnehmenden Steuergeräte ein. So dürfen maximal acht Steuergeräte im Rahmen der entsprechenden Norm Fehlermeldungen an das Diagnosegerät übermitteln.

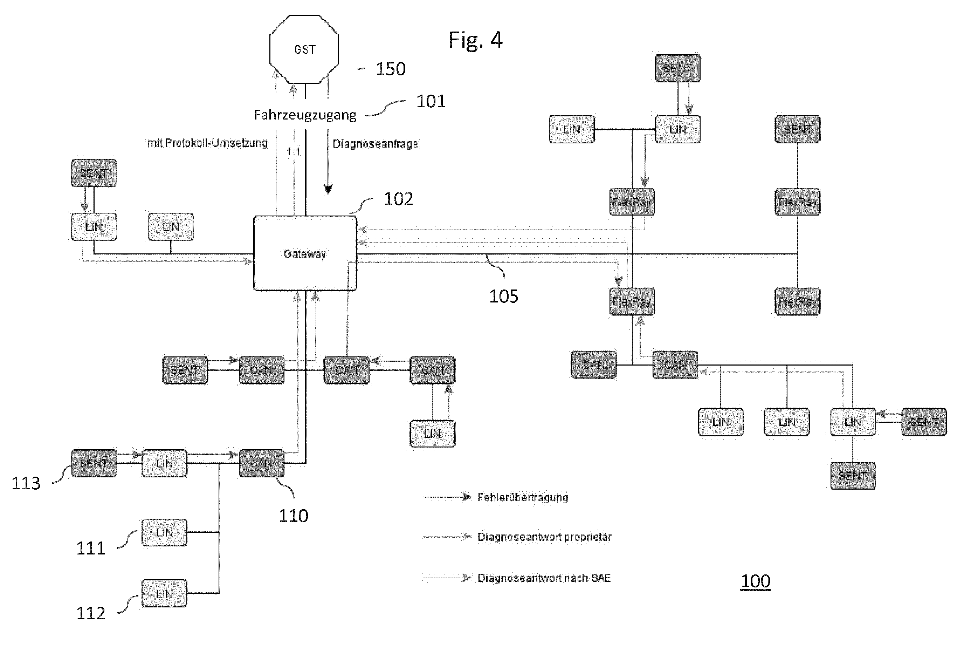

Es hat sich nunmehr allerdings gezeigt, dass die Begrenzung auf acht Teilnehmern an der Übermittlung von Diagnoseinformationen insofern problematisch ist, als bei neueren Fahrzeugen immer mehr Komponenten überwacht werden müssen, die im Rahmen der gesetzlichen Vorschriften Fehlerinformationen an das externe Diagnosegerät übermitteln müssen. Insbesondere durch die Einführung der Hybridtechnologie kommen nunmehr innerhalb von Fahrzeugen völlig neuartige Komponenten zum Einsatz, welche ebenfalls abgasrelevant sind und demzufolge entsprechende Informationen übermitteln sollten. Da allerdings die Anzahl der an der Kommunikation mit dem externen Diagnosegerät teilnehmenden Geräte nicht überschritten werden kann, muss nach Lösungen gesucht werden, die es trotz allem erlauben, dass sämtliche abgasrelevante Einheiten zuverlässig entsprechende Fehlerinformationen an das Diagnosegerät übermitteln können. In diesem Zusammenhang hat sich die Verwendung so genannter Master-Slave-Systeme etabliert, deren Funktion nachfolgend anhand von Figur 4 erläutert werden soll.

Schematisch dargestellt ist in Figur 4 das Netzwerk eines Fahrzeugdiagnosesystems, welches allgemein mit dem Bezugszeichen 100 versehen ist und dessen Fehlerinformationen von einem externen Diagnosegerät 150 ausgelesen werden können. Dieses externe Diagnosegerät 150 wird über den gesetzlich vorgegebenen Fahrzeugausgang 101, der durch einen sechszehnpoligen Stecker gebildet wird, mit dem Diagnosesystem gekoppelt. Das Diagnosesystem 100 weist intern ein Bussystem 105 auf, welches über ein Gateway 102 mit dem Fahrzeugausgang 101 verbunden ist.

Die verschiedenen Blöcke des Diagnosesystems 100 stellen Komponenten des Fahrzeugs dar, welche abgasrelevante Informationen erfassen und gegebenenfalls Fehlermeldungen ausgeben, die dann an das externe Diagnosegerät 150 zu übermitteln sind. Da wie bereits erwähnt maximal acht Geräte mit dem Diagnosegerät 150 kommunizieren dürfen und ferner auch entsprechend der gesetzlichen Norm nach Herstellen der Verbindung, also dem Anschließen des Diagnosegeräts 150 innerhalb von 50 ms eine Rückmeldung erfolgen muss, ist das Bussystem 105 in unterschiedliche Hierarchieebenen unterteilt. Beispielsweise stellt das mit dem Bezugszeichen 110 versehene Gerät ein abgasrelevantes Steuergerät 110 dar, welches als eines der acht Geräte mit dem Diagnosegerät kommunizieren darf. Diesem Steuergerät 110 sind allerdings weitere Einheiten 111, 112 und 113 nachgeordnet, welche beispielsweise Aktoren mit Lagerückmeldern oder anderweitige Sensoren darstellen können, deren Fehlermeldungen ebenfalls an das Diagnosegerät 150 zu übermitteln sind.

Im Rahmen der Master-Slave-Lösung stellen diese weiteren Einheiten 111 bis 113 nunmehr die Slave-Einheiten dar, welche nicht unmittelbar mit dem Diagnosegerät 150 kommunizieren sondern stattdessen im Falle einer Fehlermeldung diese an das übergeordnete Master-Gerät, hier das Steuergerät 110 übermitteln. Das Steuergerät 110 speichert dann auch diese Fehlermeldungen und übermittelt diese gegebenenfalls an das Diagnosegerät 150. Letztendlich bedeutet dies, dass also von dem maximal acht zulässigen Geräten die Fehlermeldungen aller weiteren Sensoren bzw. Einheiten gesammelt und dann im Falle einer Fehlerdiagnose an das externe Diagnosegerät 150 übermittelt werden. Auf diesem Wege ist sichergestellt, dass bei einer beliebigen Anzahl von abgasrelevanten Einheiten trotz allem die zulässige Maximalzahl an kommunizierenden Geräten nicht überschritten wird.

Die Kommunikation zwischen den maximal acht Geräten und dem externen Diagnosegerät muss über ein standardisiertes Diagnoseprotokoll (SAEJ1979) erfolgen. Die Fehlermeldungen müssen im Rahmen dieser Norm durch spezielle Fehlercodes an das externe Diagnosegerät übermittelt werden. Die oben erwähnten untergeordneten Slave-Einheiten übermitteln allerdings Fehlerinformationen im Rahmen bestimmter Datenpakete an die zugehörigen Master-Einheiten, welche Fehlerbits enthalten, die gegebenenfalls über auftretende Fehler Auskunft geben. Diese Datenpakete entsprechen allerdings nicht den in der oben erwähnten Norm vorgeschriebenen Fehlercodes, sodass durch den jeweiligen Master eine entsprechende Umsetzung erforderlich ist, bevor die Fehlermeldungen an das externe Diagnosegerät übermittelt werden können.

Ferner muss das Master-Gerät Kenntnis darüber besitzen, wie viele Geräte als Slave-Einheiten mit ihm verbunden sind. Außerdem ist in der Regel ein spezielles Multiplex-Verfahren zur Datenübermittlung zwischen Master-Einheit und Slave-Einheiten vorgesehen, durch welche sichergestellt ist, dass die Master-Einheit tatsächlich in der Lage ist, eintreffende Informationen richtig zu interpretieren und dann normgerecht an das Diagnosegerät zu übermitteln. Dies wiederum bedeutet allerdings, dass bei einer Änderung der Slave-Einheiten auch eine entsprechende Anpassung in der Konfiguration der Master-Einheit vorgenommen werden muss, was zu verhältnismäßig hohem Aufwand führt.

Der vorliegenden Erfindung liegt deshalb die Aufgabenstellung zugrunde, eine neue Möglichkeit zum Ausgeben von Fehlerinformationen bei einem Fahrzeugdiagnosesystem anzugeben, bei dem die oben beschriebenen Probleme vermieden werden.

Die Aufgabe wird durch ein Verfahren zum Ausgeben von Fehlerinformationen eines Fahrzeugdiagnosesystems gemäß Anspruch 1 sowie durch ein Fahrzeugdiagnosesystem gemäß Anspruch 10 gelöst. Vorteilhafte Weiterbildungen der Erfindung sind Gegenstand der abhängigen Ansprüche.

Die erfindungsgemäße Lösung beruht auf dem Gedanken, die Kommunikation zwischen den Slave-Einheiten und der zugehörigen Master-Einheit derart zu gestalten, dass eine Entkopplung zwischen beiden Geräten vorliegt. Hierunter ist zu verstehen, dass keine Abhängigkeiten mehr zwischen Slave-Einheit und Master-Einheit vorliegen, die dazu führen, dass bei einer Modifizierung der Slave-Einheit auch eine entsprechende Anpassung der Master-Einheit vorgenommen werden muss. Erfindungsgemäß wird dies dadurch erreicht, dass die Master-Einheit eingehende Meldungen nicht mehr in ein konformes Format konvertiert, sondern dieses voraussetzt und die Meldungen lediglich verwaltet und an das Diagnosegerät weiterleitet. Insbesondere werden anstelle von Fehlerbits oder Fehlerflags, die von der Master-Einheit entsprechend interpretiert und in normkonforme Fehlerinformationen umgesetzt werden, nunmehr die Slave-Einheit von sich aus bereits einen entsprechenden normkonformen Fehlercode übermittelt, gemeinsam mit einer die Einheit kennzeichnenden ID.

Erfindungsgemäß wird dementsprechend ein Verfahren zum Ausgeben von Fehlerinformationen eines Fahrzeugdiagnosesystems an ein mit einem Fahrzeug koppelbares Diagnosegerät vorgeschlagen, wobei das Diagnosegerät mit dem Fahrzeug über einen Kommunikationsanschluss lösbar verbunden werden kann und der Kommunikationsanschluss fahrzeugintern mit mindestens einem Gerät verbunden ist, welches nach Aufforderung durch das Diagnosegerät gespeicherte Fehlerinformationen an das Diagnosegerät übermittelt. Und wobei dem die Fehlerinformation übermittelten Gerät mindestens ein Slave nachgeordnet ist, dessen Fehlermeldung von dem Gerät gespeichert und an das Diagnosegerät übermittelt wird, wobei erfindungsgemäß der Slave Fehlermeldungen an das zugeordnete Steuergerät in Form eines Fehlercodes gemeinsam mit einer den Slave kennzeichnenden Identifikation übermittelt. Insbesondere werden hierbei von der Slave-Einheit bereits die SAE-konformen Fehlercodes übermittelt.

Die neuartige Ausgestaltung der Kommunikation zwischen Master- und Slave-Einheit führt wie bereits erwähnt zu einer Entkopplung zwischen beiden Geräten. Bei einem Wechsel bzw. einer Änderung des entsprechenden SAE-Fehlercodes ist dementsprechend allenfalls eine entsprechende Änderung der Slave-Einheit erforderlich. Auch können durch entsprechende Ausgestaltung der Slave-Einheit in einfacher Weise neuartige Diagnosen hinzugefügt werden bzw. auf Diagnosen verzichtet werden. In all diesen Fällen ist lediglich eine Anpassung des Slave erforderlich, nicht jedoch der Master-Einheit. Ferner können entsprechende Fehlermeldungen effizient in Datenpakete gebündelt werden, sodass die Buslast also die Menge der über das Bussystem zu übermittelnden Daten minimiert werden kann. Ein weiterer Vorteil ergibt sich darin, dass abhängig von der Anzahl der Diagnosen nur eine Botschaft erforderlich ist.

Dabei kann gemäß einer Weiterbildung des erfindungsgemäßen Systems auch vorgesehen sein, dass zusätzlich zu den SAE-konformen Fehlercodes auch mehrere Einzelfehler übermittelt werden können. Dies kann insofern von Interesse sein, als durch das gesetzlich vorgeschriebene Diagnosegerät bestimmte Fehlermeldungen abgefragt werden, im Falle einer Wartung und dem Fahrzeughersteller jedoch gegebenenfalls noch zusätzliche Informationen abgefragt werden sollen, die detaillierte Auskunft über etwaige Probleme der Fahrzeugsteuerung geben können. Eine entsprechende Erweiterung der erfindungsgemäßen Kommunikation dahingehend, dass detailliert Informationen über Einzelfehler übermittelt werden, ist jederzeit möglich.

Eine andere Weiterbildung des erfindungsgemäßen Konzepts kann auch darin bestehen, dass die von der Slave-Einheit an den Master übermittelte Information auch Auskunft darüber gibt, ob der Fehler zu einer entsprechenden Aktivierung der Motorkontrollleuchte (MIL) führen soll. Dies ist insofern wesentlich, als gemäß der erfindungsgemäßen Lösung nunmehr die Master-Einheit von der Aufgabe entbunden ist, die übermittelten Informationen zu interpretieren und in die normkonformen Fehlercodes umzusetzen. Das heißt, die Master-Einheit muss im Prinzip die übermittelten Fehlercodes von den Slave-Einheiten gar nicht verstehen. Für den Fall jedoch, dass es sich um Fehler handelt, die entsprechend den Vorschriften zu einem Aktivieren der Motorkontrollleuchte führen müssen, kann dies dem Master bei der Übermittlung der Fehlercodes entsprechend angezeigt werden. Wiederum muss der Master den Fehlercode zwar nicht verstehen, er weiß nun allerdings, dass die Fehlermeldung zu einer Aktivierung der Motorkontrollleuchte führen soll (ohne dass er weiß, um was für einen Fehler es sich handelt), wobei noch die Zusatzinformation enthalten sein kann, ob bereits beim ersten Auftreten des Fehlers oder - wie dies bei den meisten Fehlern der Fall ist - erst nach mehrmaligem, beispielsweise dem zweiten oder dritten wiederholten Auftreten des Fehlers die Motorkontrollleuchte aktiviert werden soll. Das heißt, alle Vorschriften bezüglich der Übermittlung von Fehlerinformationen bzw. der Aktivierung der Motorkontrollleuchte können in gewohnter Weise zuverlässig erfüllt werden, wobei jedoch der oben erwähnte Vorteil der Entkopplung zwischen Master- und Slave-Einheit erzielt wird.

Bei der Master-Einheit der erfindungsgemäßen Lösung kann es sich um eine Steuereinheit des Fahrzeugs handeln, wobei in diesem Fall dann das System hinsichtlich seines Aufbaus demjenigen von Figur 4 entspricht. Gemäß einer besonders bevorzugten Weiterbildung der Erfindung kann allerdings vorgesehen sein, dass in das Fahrzeug eine zusätzliche Einheit integriert wird, welche die Master-Funktion übernimmt und von den untergeordneten Slaves bzw. Einheiten, die nicht an der Kommunikation mit dem externen Diagnosegerät teilnehmen dürfen, die Fehlermeldungen sammelt und zwischenspeichert. Dabei besteht die Möglichkeit, dieses zusätzliche Gerät, dessen Funktion hauptsächlich darin besteht, die Fehlermeldungen entsprechend der Norm an das externe Diagnose-Gerät zu übermitteln, in spezieller Weise mit dem Fahrzeugausgang und damit mit dem Diagnosegerät zu koppeln. Insbesondere kann hierbei eine Umgehung des üblicherweise für die Kommunikation zwischen den Steuergeräten und dem Diagnosegerät verantwortlichen Gateways vorgesehen sein. Das heißt, das Zusatzgerät ist unmittelbar mit dem Fahrzeugausgang gekoppelt und kann bei einem Anschluss des externen Diagnosegeräts direkt mit diesem kommunizieren. Hierdurch wird das Einhalten der maximalen Responsezeit von 50 ms erleichtert, sodass wiederum eine Verbesserung beim Einhalten der entsprechenden Vorschriften erzielt wird.

Letztendlich wird also durch die erfindungsgemäße Lösung das Ausgeben von Fehlerinformationen an ein externes Diagnosegerät deutlich optimiert.

Nachfolgend soll die Erfindung anhand der beiliegenden Zeichnungen näher erläutert werden. Es zeigen:
- Figur 1: schematisch ein Fahrzeug mit darin befindlichen abgasrelevanten Steuergeräten, welche im Rahmen einer On-Board-Diagnose Fehlerinformationen speichern und gegebenenfalls an ein externes Diagnosegerät übermitteln müssen;
- Figur 2: beispielhaft eine entsprechende Fahrzeugarchitektur mit den zur Durchführung der Online-Diagnose verantwortlichen Komponenten;
- Figur 3: eine vorteilhafte Weiterbildung des erfindungsgemäßen Diagnosesystems und
- Figur 4: schematisch eine Fahrzeugarchitektur gemäß dem Stand der Technik.

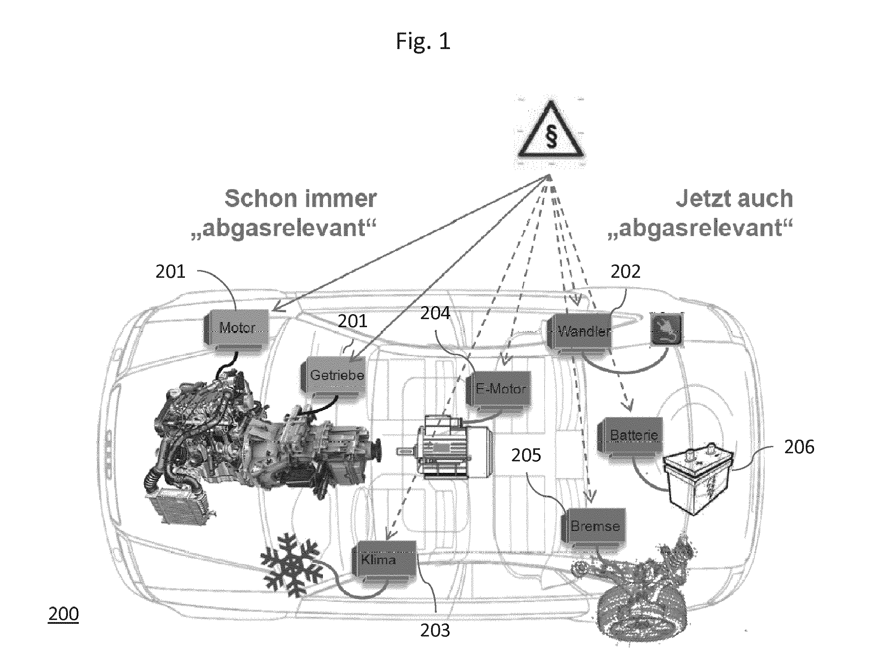

In Figur 1 ist ein allgemein mit dem Bezugszeichen 200 versehenes Fahrzeug dargestellt, welches darin befindliche Komponenten aufweist, die abgasrelevant sind. Dargestellt sind beispielsweise die entsprechenden Steuereinheiten für den Motor und das Getriebe, deren Daten schon immer als abgasrelevant angesehen wurden und welche dementsprechend gemäß den gesetzlichen Vorschriften Messungen durchführen sowie entsprechende Fehlerinformationen speichern und an ein externes Diagnosegerät übermitteln mussten. Mit der zunehmenden Komplexität von Fahrzeugen werden allerdings immer mehr Steuergeräte und Komponente der Fahrzeuge abgasrelevant bzw. sind der entsprechenden Norm zur On-Board-Diagnose unterworfen. Neben dem Steuergerät für den Motor und das Getriebe 201 bzw. 202 betrifft dies im Falle von Hybridfahrzeugen beispielsweise die Klimaanlage 203, sowie den Elektromotor 204, das Bremssystem 205, die Batterie 206 sowie den Wandler 207. In Figur 1 sind lediglich beispielhaft einige Komponenten eines Fahrzeugs dargestellt, welche entsprechend den gesetzlichen Vorschriften an der On-Board-Diagnose teilnehmen müssen. Wie bereits erwähnt sind in Realität tatsächlich deutlich mehr Geräte betroffen, sodass die in der zugehörigen Vorschrift vorgegebene maximale Anzahl von acht Geräten, die mit dem externen Diagnosegerät kommunizieren dürfen, deutlich überschritten wird. An dieser Stelle soll nochmals darauf hingewiesen werden, dass die vorliegende Erfindung die On-Board-Diagnose und das Speichern und Ausgeben von Fehlermeldungen im Rahmen der gesetzlichen Vorschriften betrifft. Die teils deutlich detaillierteren On-Board-Diagnoseverfahren, welche von den Herstellern individuell eingesetzt werden, sind deutlich komplexer. Sie unterliegen allerdings nicht den strengen Vorschriften hinsichtlich der zulässigen Anzahl der kommunizierenden Geräte sowie der maximalen Antwortzeit, weshalb hier die der vorliegenden Erfindung zugrundeliegenden Probleme nicht existieren.

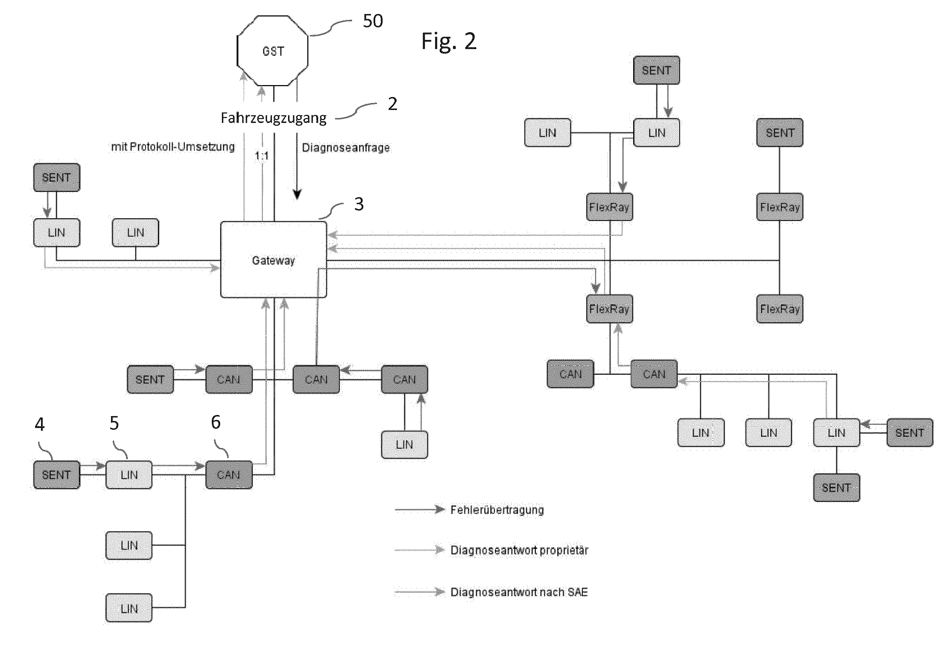

Figur 2 zeigt beispielhaft eine entsprechende Fahrzeugarchitektur, wobei erkennbar ist, dass diese hinsichtlich ihrer Struktur dem aus dem Stand der Technik bekannten Beispiel gemäß Figur 4 entspricht. In einer ersten Form der vorliegenden Erfindung soll auch tatsächlich die Fahrzeugstruktur hinsichtlich der entsprechenden Komponenten des Diagnosesystems nicht verändert werden, sondern das System ist hinsichtlich seiner Hierarchie in gleicher Weise aufgebaut, wie dies bislang bekannt war. Das heißt, einige Steuergeräte sind dazu berechtigt, unmittelbar mit dem an dem Fahrzeugzugang 2 angeschlossenen Diagnosegerät (GST) 50 zu kommunizieren. Die Kommunikation erfolgt dabei über das Gateway 3, wobei die Kommunikation mittels des in den USA gesetzlich vorgeschriebenen Protokolls CAN erfolgt. Das heißt, alle in dem Beispiel von Figur 2 dargestellten Komponenten, welche über den so genannten CAN-Bus kommunizieren, treten unmittelbar in Kontakt mit dem externen Diagnosegerät 50.

Diesen maximal acht Steuergeräten nachgeordnet sind allerdings weitere Slaves bzw. Sensoren oder Aktoren welche ebenfalls an der On-Board-Diagnose teilnehmen und gegebenenfalls Fehlerinformationen zur Verfügung stellen. Im Rahmen des bereits eingangs erwähnten Master-Slave-Prinzips ist nunmehr vorgesehen, dass diese weiteren Einheiten an die Steuergeräte, welche an den CAN-Bus angeschlossen sind, Fehlerinformationen übermitteln, sodass diese dann diese Informationen zwischenspeichern und gegebenenfalls dem Diagnosegerät 50 zur Verfügung stellen. Insofern entspricht die erfindungsgemäße Ausführungsform der aus dem Stand der Technik bekannten Vorgehensweise. Allerdings zeichnet sich die erfindungsgemäße Lösung durch den Einsatz eines neuen Transportprotokolls aus, welches die Übermittlung von Fehlerinformationen von nachgeordneten Einheiten an die unmittelbar mit dem Diagnosegerät 50 kommunizierenden Einheiten betrifft. Dabei ist nunmehr vorgesehen, dass die nachgeordneten Einheiten Fehlermeldungen in Form SAE-konformer Fehlercodes übermitteln, wobei gleichzeitig das den Fehlercode beinhaltende Datenpaket eine den Sender kennzeichnende ID enthält. Die auf diese Art und Weise übermittelte Fehlerinformation liegt also bereits von Anfang an in einer Form vor, in der sie auch gegebenenfalls an das externe Diagnosegerät übermittelt werden kann. Das übergeordnete Steuergerät muss in diesem Fall also nicht mehr zwingend die eintreffende Fehlerinformation interpretieren und in eine Form umsetzen, in der sie dann an das externe Diagnosegerät übermittelt werden kann. Dem Steuergerät ist es dementsprechend "egal" von welcher nachgeordneten Einheit eine Fehlerinformation übermittelt wurde. Diese Entkopplung bringt zunächst einmal den Vorteil mit sich, dass das übergeordnete Steuergerät nicht jedes Mal entsprechend modifiziert werden muss, wenn sich an den nachgeordneten Einheiten etwas ändert bzw. neue Einheiten hinzugefügt werden. Änderungen beispielsweise in der Norm oder in Gesetzen müssen dementsprechend lediglich entweder im Slave oder im Master umgesetzt werden. Eine Anpassung der jeweils anderen Einheit ist nicht mehr länger erforderlich.

Ein weiterer Vorteil besteht darin, dass das Übertragen der Fehlermeldungen von der nachgeordneten Einheit zu der Steuereinheit erleichtert wird, da bislang zum Einsatz kommende teils aufwändige Verfahren durch die sichergestellt war, dass tatsächlich zu bestimmten Zeitpunkten lediglich bestimmte Einheiten Datenpakete übermitteln durften, nunmehr nicht mehr bestehen. Stattdessen ist eine einfache Fehlerübertragung im Multiplex-Verfahren möglich, wobei darüber hinaus auch die Möglichkeit besteht Fehlermeldungen mit speziellem Diagnosestatus ("fail") zu priorisieren. Generell kann es von Vorteil sein, wenn zusätzlich zu der Fehlermeldung auch durch die Einheit ein Diagnosestatus wie beispielweise "pass", "fail", "Test completed", "Test not completed", übermittelt wird. Diese zusätzliche Information erleichtert die Verwaltung der entsprechenden Informationen durch den Master, also das übergeordnete Steuergerät. Ferner kann sichergestellt werden, dass der so genannte IUMPR-Status in einfacher Weise ermittelt werden kann, da die Daten selbst nunmehr Informationen enthalten, die Auskunft darüber geben, ob ein Signalstatus relevant ist oder nicht.

Wie vorher bereits erwähnt ist im Rahmen der On-Board-Diagnose darüber hinaus auch vorgesehen, dass bestimmte Fehlermeldungen zur Aktivierung der Motorkontrollleuchte in dem Fahrzeug führen. Gemäß einer weiteren vorteilhaften Weiterbildung der Erfindung kann deshalb vorgesehen sein, dass die an den Master übermittelte Information zusätzlich auch eine Information dahingehend enthält, ob es sich hierbei um einen Fehler handelt, der zum Aktivieren der Motorkontrollleuchte führen sollte. Dies erleichtert wiederum dann der übergeordneten Steuereinheit das gegebenenfalls erforderliche Aktivieren der Motorkontrollleuchte einzuleiten, und zwar unabhängig davon, dass das Steuergerät weiß, um welche Fehlermeldung genau es sich handelt. Die hierzu zusätzlich übertragene Information kann beispielsweise dann auch Informationen beinhalten, ob ein erstmaliges Auftreten des Fehlers oder erst ein mehrmaliges Auftreten des Fehlers zum Aktivieren der Kontrollleuchte führen sollte. Basierend auf diesen Informationen kann dann eine entsprechende Reaktion veranlasst werden.

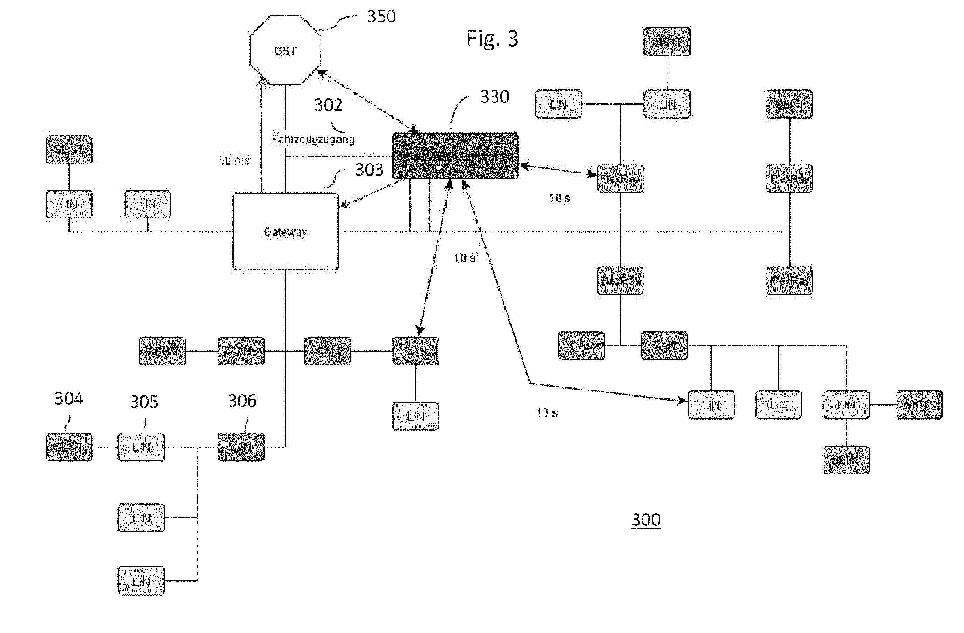

Eine andere vorteilhafte Weiterbildung der Erfindung ist in Figur 3 dargestellt. Diese Weiterbildung unterscheidet sich von der Lösung gemäß Figur 2 in erster Linie in der Frage, welches Gerät als Master-Gerät für die erfindungsgemäße Kommunikation verwendet wird. Während bei dem Ausführungsbeispiel gemäß Figur 2 ausschließlich die bislang als Master verwendeten Steuergeräte die Zwischenspeicherung von Fehlerinformationen nachgeordneter Einheiten übernahmen, ist nunmehr bei dem Beispiel gemäß Figur 3 ein zusätzliches Master-Gerät 330 vorgesehen, dessen Aufgabe darin besteht, Fehlerinformationen von Einheiten des Fahrzeugdiagnosesystems zwischenzuspeichern und dem externen Diagnosegerät zur Verfügung zu stellen. Optional kann dieses Zusatzgerät auch eine entsprechende Aktivierung der Motorkontrollleuchte initiieren, sofern dies aufgrund der empfangenen Fehlermeldungen erforderlich ist.

Die Kommunikation zwischen den nachgeordneten Einheiten und diesem zusätzlichen Gerät 330 erfolgt in der oben beschriebenen Weise, das heißt, es werden SAEkonforme Fehlerinformationen gemeinsam mit einer ID des Senders übermittelt. Eine Besonderheit dieser zusätzlichen Einheit besteht nunmehr allerdings darin, dass diese in besonders schneller und effizienter Weise mit dem externen Diagnosegerät kommunizieren kann. Dies wird dadurch dargestellt, dass in der Struktur des Systems diese Einheit derart angeordnet werden kann, dass sie das Gateway des Systems überbrückt und unmittelbar über den Fahrzeugausgang mit dem Diagnosegerät verbunden wird. In diesem Fall liegt also eine direkte Datenverbindung zwischen externem Diagnosegerät und internem Zusatzgerät vor, welche es ermöglicht, dass das Zusatzgerät sehr schnell auf eine Verbindung des Diagnosegeräts mit dem Fahrzeugausgang reagieren kann. Die gesetzlich vorgeschriebene maximale Response- bzw. Antwortzeit von 50 ms kann in diesem Fall problemlos eingehalten werden, da das Zusatzgerät wie bereits erwähnt unmittelbar mit dem externen Diagnosegerät kommunizieren kann.

Das zusätzliche Gerät kann dabei vorzugsweise die Fehlerinformationen aller Einheiten des On-Board-Diagnosesystems Zwischenspeichern und an das externe Diagnosegerät übermitteln. Alternativ hierzu könnten allerdings einige der besonders relevanten Steuergeräte, beispielsweise das Motorsteuergerät, nach wie vor in bisheriger Weise mit dem Diagnosegerät kommunizieren. Ein wesentlicher Vorteil besteht dabei darin, dass die Funktion der bislang unmittelbar mit dem Diagnosegerät kommunizierenden Einheiten, also der bisherigen Master-Steuergeräte nicht verändert werden muss. Lediglich nachgeordnete Geräte müssen nunmehr derart modifiziert werden, dass nunmehr das Zusatzgerät als ihr zugehöriger Master angesehen wird, an den die Fehlerinformationen übermittelt werden. Das heißt, eine Erweiterung bislang bestehender Systeme durch das Zusatzgerät ist ohne großen Aufwand durchführbar.

Letztendlich wird also durch die erfindungsgemäße Lösung sichergestellt, dass die Übermittlung von Fehlerinformationen im Rahmen der gesetzlich vorgeschriebenen On-Board-Diagnose in gewohnt zuverlässiger Weise realisiert werden kann. Durch den Einsatz eines neuen Kommunikationsprotokolls jedoch kann deutlich flexibler auf Änderungen in den entsprechenden Normen/Gesetzen bzw. in den die Fehlerinformation liefernden Slave-Einheiten reagiert werden.

## Patentansprüche

1. Verfahren zum Ausgeben von Fehlerinformationen eines Fahrzeugdiagnosesystems (100) an ein mit einem Fahrzeug koppelbares Diagnosegerät (50),
wobei das Diagnosegerät (50) mit dem Fahrzeug über einen Kommunikationsanschluss (2, 302) lösbar verbunden werden kann und der Kommunikationsanschluss fahrzeugintern über ein Bussystem mit mindestens einem Steuergerät verbunden ist, welches nach Aufforderung durch das Diagnosegerät gespeicherte Fehlerinformationen an das Diagnosegerät übermittelt, und
wobei dem Steuergerät mindestens ein Slave (110, 111, 112, 113) nachgeordnet ist, dessen Fehlermeldungen von dem Steuergerät gespeichert und an das Diagnosegerät übermittelt werden,
**dadurch gekennzeichnet,**
**dass** der Slave (110, 111, 112, 113) Fehlermeldungen an das zugeordnete Steuergerät in Form eines Fehlercodes gemeinsam mit einer den Sensor kennzeichnenden Identifikation übermittelt.

2. Verfahren gemäß Anspruch 1, **dadurch gekennzeichnet, dass** das Steuergerät die Fehlermeldung des Slave an das Diagnosegerät übermittelt, ohne diese zu verändern.

3. Verfahren gemäß Anspruch 2, **dadurch gekennzeichnet, dass** neben den Fehlermeldungen auch andere Informationen übermittelt werden, welche der Slave (110, 111, 112, 113)aussendet.

4. Verfahren gemäß Anspruch 3, **dadurch gekennzeichnet, dass** die weiteren Informationen Einzelfehler sind.

5. Verfahren gemäß Anspruch 2, **dadurch gekennzeichnet, dass** neben den Fehlermeldungen auch signalisiert wird, ob der übermittelte Fehler zu einer Aktivierung der Motorkontrollleuchte führen soll, und diese bei Empfang dieser Information entsprechend aktiviert wird.

6. Verfahren gemäß Anspruch 5, **dadurch gekennzeichnet, dass** ferner eine Zusatzinformation übermittelt wird, ob bereits beim ersten Auftreten des Fehlers oder erst nach mehrmaligem Auftreten des Fehlers die Motorkontrollleuchte aktiviert werden soll.

7. Verfahren gemäß Anspruch 2, **dadurch gekennzeichnet, dass** sämtliche Fehlermeldungen des Fahrzeugdiagnosesystems über ein und dasselbe Steuergerät übermittelt werden.

8. Verfahren gemäß Anspruch 7, **dadurch gekennzeichnet, dass** das Steuergerät als zusätzliches Gerät (330) derart im Fahrzeugdiagnosesystem angeordnet ist, dass dieses direkt mit sämtlichen Slaves (4, 5, 6) des Fahrzeugdiagnosesystems verbunden ist und das Gateway (3) dieses Systems überbrückt und unmittelbar über den Fahrzeugausgang mit dem Diagnosegerät verbunden ist.

9. Verfahren gemäß Anspruch 8, **dadurch gekennzeichnet, dass** das zusätzliche Gerät (330) die Fehlerinformationen einiger Einheiten des Diagnosesystems zwischenspeichert und an das externe Diagnosegerät übermittelt.

10. Fahrzeugdiagnosesystem, umfassend
einen Kommunikationsanschluss (2), über welchen ein mit einem Fahrzeug kuppelbares Diagnosegerät lösbar verbunden werden kann, wobei der Kommunikationsanschluss (2) fahrzeugintern über ein BUS-System mit mindestens einem Steuergerät verbunden ist, welches nach Aufforderung des Diagnosegeräts gespeicherte Fehlinformationen an das Diagnosegerät übermittelt und
wobei dem Steuergerät mindestens ein Slave nachgeordnet ist, dessen Fehlermeldungen von dem Steuergerät gespeichert und an das Diagnosegerät übermittelt werden, **dadurch gekennzeichnet,**
**dass** der Slave Fehlermeldungen an das zugeordnete Steuergerät in Form eines Fehlercodes gemeinsam mit einer den Slave kennzeichnenden Identifikation übermittelt.

11. Master-Steuergerät (330) zur Verwendung in einem Fahrzeug-Diagnosesystem, das dazu eingerichtet, die von Slave Geräten (4, 5, 6) des Fahrzeug-Diagnosesystems übermittelten Informationen zwischen zu speichern und über einen Kommunikationsanschluss (2) eines Fahrzeugs an ein Diagnosegerät zu kommunizieren,
**dadurch gekennzeichnet, dass**
das Master-Steuergerät (330) derart eingerichtet ist, dass ein bereits vorhandenes Gateway (3) des Fahrzeugdiagnosesystems überbrückt und das Master-Steuergerät (330) unmittelbar mit dem Diagnosegerät verbunden werden kann, um eine direkte Datenverbindung zwischen den beiden Geräten herzustellen.

12. Master-Steuergerät (330) nach Anspruch 11, **dadurch gekennzeichnet, dass** die eingehenden Informationen der Slave-Geräte (4, 5, 6) ausgewertet werden, um zu entscheiden, ob der übermittelte Fehler zu einer Aktivierung der Motorkontrollleuchte führen soll, und diese bei Empfang dieser Information entsprechend aktiviert wird.
